# FASCICULE DE BREVET EUROPEEN

(11) **EP 0 542 553 B1**
(45) Date de publication et mention de la délivrance du brevet: **05.03.1997**
(21) Numéro de dépôt: 92310352.7
(22) Date de dépôt: 12.11.1992
(51) Int. Cl.: B32B 3/02

(54) **Plaques antiglissantes**
Rutschfeste Platten
Antislip sheets

(30) Priorité: 14.11.1991 FR 9113978
(43) Date de publication de la demande: 19.05.1993
(73) Titulaire: KAYSERSBERG PACKAGING S.A., 92402 Courbevoie Cédex (FR)
(72) Inventeur: Coudert, Catherine, F-68920 Wintzenheim (FR); Coste, Jean-Philippe, F-68240 Kaysersberg (FR)
(74) Mandataire: Johnson, Terence Leslie

(56) Documents cités:
- EP-A- 0 150 950
- EP-A- 0 252 718
- EP-A- 0 259 165
- GB-A- 2 156 672
- US-A- 4 693 507
- DATABASE WPIL, AN=90-358596 (48), Derwent Publications Ltd, Londres, GB; & JP-A-2 259 639 (FUJI PHOTO FILM K.K.) 22-10-1990

## Description

La présente invention concerne des plaques antiglissantes. Plus précisément, l'invention se rapporte à des plaques à base de polyoléfine pour intercalaires ou emballages destinés au transport et à la livraison de contenants.

Les plaques en polyoléfine alvéolaires extrudées ou pleines calandrées sont couramment utilisées comme intercalaires ou emballage de contenants en verre, par exemple des bouteilles, ou en métal, etc.

Un objet de la présente invention est de pouvoir disposer de plaques à base de polyoléfine présentant des caractéristiques antiglissantes tout en conservant leurs propriétés mécaniques intrinsèques, notamment de rigidité et de tenue au froid.

La présente invention répond à un tel objet et fournit une plaque, composée d'une couche de coeur en polyoléfine qui comporte sur au moins une de ses faces une couche externe antiglissante contenant un produit thermoplastique compatible avec les polyoléfines et ledit produit possédant des propriétés antiglissantes, caractérisée en ce que l'epaisseur de ladite couche externe est comprise entre environ 5 et environ 150µm.

La couche de coeur constituant l'âme de la plaque peut être une plaque pleine calandrée ou bien alvéolaire extrudée.

La matière de la couche de coeur est une polyoléfine, chargée ou non, standard pour les applications envisagées, c'est-à-dire les plaques pleines calandrées ou les plaques alvéolaires extrudées.

La couche externe antiglissante contient un produit thermoplastique possédant des propriétés antiglissantes. Ce produit thermoplastique est par exemple un thermoplastique à base de polyoléfine très mou et ayant un module très faible tel le Hifax FX 7036 XCP commercialisé par Himont ou un caoutchouc thermoplastique, tel le Santoprène 201-55 commercialisé par Advanced d'Elastomer Systems.

La concentration en produit thermoplastique dans la couche externe est au moins égale à environ 5 % en poids; pour les plaques pleines elle est de préferénce égale à environ 20 à 50 % en poids et peut atteindre 100 % en poids; pour les plaques alvéolaires elle est de préférence égale à environ 20 % en poids et peut atteindre environ 30 % en poids.

Il faut toutefois comprendre que la limite supérieure de la concentration en produit thermoplastique dans la couche externe des plaques alvéolaires dépend du procédé de fabrication de ces plaques et que la limite d'environ 30 % donnée ci-dessus à titre indicatif peut être plus élevée avec une mise en oeuvre différente dudit procédé.

L'épaisseur de la couche externe antiglissante est comprise de préférence environ 30 à environ 70 µm.

L'homme de l'art ajustera aisément l'épaisseur de la couche externe et la concentration en produit thermoplastique dans ladite couche en fonction de sperformances d'antiglisse recherchées.

Les performances d'antiglisse sont déterminées par l'angle de glissement dont un protocole de mesure est donné ci-après.

L'angle de glissement, qui est fonction du contenant, dépend des paramètres suivants:
- concentration du produit thermoplastique dans la couche externe;
- épaisseur de la couche externe;
- état de la surface de la couche externe.

Les plaques antiglissantes selon l'invention sont fabriquées de manière connue en soi, par un procédé de coextrusion ou bien en utilisant une filière multicouche. Un tel procédé de coextrusion est décrit dans l'ouvrage Kunstoff-Extrusionstechnik, Tome II: Extrusions.lagen, p. 200 de Hansen, Knappe, Potente aux Editions Hansen.

Dans le cas d'une plaque alvéolaire, la matière est calibrée sous vide à aide d'un conformateur à la sortie de la filière.

### Mesure de l'angle de glissement

On pose un échantillon de contenant sur une éprouvette de la plaque à tester, reposant sur un plan horizontal. On incline l'ensemble lentement. On mesure l'angle maximum avant glissement dudit échantillon de contenant.

L'échantillon de contenant est posé à l'extrémité la plus éloignée de l'axe de rotation.

Le plan est incliné à la vitesse de rad/s (α°/s). Un relais, positionné à proximité de l'axe de rotation, arrête le chronomètre quand l'échantillon de contenant glisse.

La mesure du temps nécessaire au glissement de l'échantillon de contenant donne son angle de glissement sur la plaque testée.

### Protocole de mesure de l'angle de glissement pour une bouteille de bière de 25 cl vidée, type Elégance de Kronembourg.

La bouteille vidée est préalablement lestée (par des pièces métalliques) pour atteindre un poids de 407 g afin d'abaisser son centre de gravité.
- Découpe de échantillons de 12 cm x 12 cm sur la largeur de la plaque.
- Placer l'échantillon à analyser sur le plan inclinable.
- Poser à l'extrémité de l'éprouvette la bouteille (extrémité la plus éloignée de l'axe de rotation de la table où se trouve le relais).
- Faire une mesure pour le recto, le verso (parallèlement ou perpendiculairement aux éventuelles cannelures).
- Mesurer l'angle maximum avant que la bouteille glisse. Pour cela, on mesure le temps nécessaire au glissement de la bouteille sachant que la vitesse d'inclinaison est de 1.745 X 10-2 rad/s (1°/seconde).
- Vérifier l'horizontalité du plan inclinable (avec un niveau à bulles) avant chaque mesure.
- Calculer l'angle moyen pour chacune des faces (recto-verso) et orientation (parallèle ou perpendiculaire aux éventuelles cannelures).
- Le résultat d'angle est exprimé en degrés.

### Exemple 1

On a fabriqué des plaques ayant une couche de coeur en polypropylène et une couche externe coextrudée contenant 100 % du produit thermoplastique à base de polyoléfine Hifax FX 7036 XCP commercialisé par Himont, dont les propriétés sont données dans le Tableau I ci-dessous.

**Tableau I**

| Propriété | Méthode | Unité | |
|---|---|---|---|
| Indice de fluidité "L" | ASTM D 1238 | g/10' | 0,8 |
| Poids spécifique | ASTM D 792 | g/cm3 | 0,89 |
| Module d'élasticité | ASTM D 790 | MPa | 100 |
| Contrainte au seuil d'écoulement | ASTM D 638 | MPa | 5 |
| à la rupture | | MPa | >8 |
| Allongement au seuil d'écoulement | | % | 60 |
| à la rupture | | % | >350 |
| Point de ramollissement VICAT (10N) | ASTM D 1525 | °C | 55 |
| Dureté Shore D | ASTM D 2240 | -- | 30 |

L'angle de glissement a été mesuré pour différentes épaisseurs de la couche externe pour un contenant constitué par une bouteille en verre selon le protocole indiqué ci-dessus. Les résultats sont donnés dans le Tableau II ci-dessous :

**Tableau II**

| Epaisseur de la couche externe (µm) | Angle de glissement moyen (°) |
|---|---|
| 0 | 16 |
| 40 | 25 |
| ≥ 50 | 30 (*) |

| | |
|---|---|
| (*) : La valeur d'angle maximum mesurable selon le test utilisé est de 30°. Au-delà de 30°, il y a chute du contenant considére. | |

### Exemple 2

On a fabriqué des plaques ayant une couche de coeur en polypropylène et une couche externe coextrudée contenant un mélange de 50 % du produit Hifax FX 7036 XCP de l'Exemple 1 et 50 % de polypropylène.

Le Tableau III ci-dessous donne les valeurs de l'angle de glissement moyen pour différentes épaisseurs de la couche externe,

**Tableau III**

| Epaisseur de la couche externe (µm) | Angle de glissement moyen (°) |
|---|---|
| 0 | 16 |
| 30 | 24 |
| ≥ 50 | 26 |

### Exemple 3

On a fabriqué des plaques ayant une couche de coeur en polypropylène et une couche externe coextrudée contenant 100 % du produit thermoplastique à base de polyoléfine Hifax FX 7042 XCP commercialisé par Himont, dont les propriétés sont données dans le Tableau IV ci-dessous.

**Tableau IV**

| Propriété | Méthode | Unité | |
|---|---|---|---|
| Indice de fluidité "L" | ASTM D 1238 | g/10' | 8 |
| Poids spécifique | ASTM D 792 | g/cm3 | 0,89 |
| Module d'élasticité | ASTM D 790 | MPa | 100 |
| Contrainte au seuil d'écoulement | ASTM D 638 | MPa | 5 |
| à la rupture | | MPa | 8 |
| Allongement au seuil d'écoulement | | % | 60 |
| à la rupture | | % | 400 |
| Point de ramollissement VICAT (10N) | ASTM D 1525 | °C | 55 |
| Dureté Shore D | ASTM D 2240 | -- | 30 |

Le Tableau V ci-dessous donne les valeurs de l'angle de glissement moyen pour différentes épaisseurs de la couche externe, mesuré dans les mêmes conditions et pour le même contenant que dans l'Exemple 1.

**Tableau V**

| Epaisseur de la couche externe (µm) | Angle de glissement moyen (°) |
|---|---|
| 0 | 15 |
| 50 | 20 |
| 80 | 23 |
| 100 | 27 |

### Exemple 4

On a fabriqué des plaques ayant une couche de coeur en polypropylène et une couche externe coextrudée contenant 100 % du caoutchouc thermoplastique constitué d'une matrice de polypropylène dans laquelle se trouvent des particules d'EPDM réticulées entre elles commercialisé sous la dénomination Santoprène TM 201-55 par Advanced Elastomer Systems, dont les propriétés sont données dans le Tableau VI ci-dessus.

**Tableau VI**

| Propriété | Méthode | Unité | |
|---|---|---|---|
| Dureté Shore A(5 sec.) | ASTM D-2240 | | 58 |
| Poids spécifique | ASTM D- 792 | g/cm3 | 0,965 |
| Contrainte ultime | ASTM D- 412 | KPa | 5482 |
| Allongement ultime % | ASTM D- 412 | | 379 |
| Module 100 % | ASTM D- 471 | KPa | 2193 |
| Viscosité ACR | TPE-0137 | Pa.s | 29,7 |

Par une épaisseur de couche externe coextrudée comprise entre 100 et 150 µm, l'angle de glissement, mesuré dans les mêmes conditions et pour le même contenant que dans l'Exemple 1, est de 31°.

Une plaque antiglissante selon l'invention peut avoir des avantages suivantes:-
1) La plaque intercalaire composé d'une couche de coeur en polyoléfine de préferénce présente une épaisseur de 0.5 à 7 mm, de préférence de 1.2 à 3.5 mm.
2) Le module de flexion de la polyoléfine utilisée pour la couche de coeur de la plaque présente un module d'élasticité de préférence compris entre 1100 et 3500 N/mm² (mesuré selon la norme DIN 53457).
3.) Le matériau thermoplastique constituant la ou les couche(s) externe(s) de préférence présente les propriétés suivantes:
   - son module de flexion est inférieur à 200 N/mm² mesuré selon la norme ASTM D.790):
   - sa dureté est inférieure à 40 shore D.
4) Les deux produits thermoplastiques constituant respectivement la couche de coeur et la ou les couche(s) antiglissante(s) sont extrudés de préférence simultanément par un procédé de coextrustion.

## Revendications

1. Plaque pour intercalaires ou emballages composée d'une couche de coeur en polyoléfine qui comporte sur au moins une de ses faces une couche externe antiglissante contenant un produit thermoplastique compatible avec les polyoléfines et ledit produit possédant des propriétés antiglissantes, caractérisée en ce que l'epaisseur de ladite couche externe est comprise entre environ 5 et environ 150µm.

2. Plaque selon la revendication 1 dans laquelle la concentration en ledit produit thermoplastique dans ladite couche externe est au moins égale à environ 5 % en poids.

3. Plaque pleine selon l'une des revendications 1 et 2 dans laquelle la concentration en ledit produit thermoplastique dans ladite couche externe peut atteindre 100 % en poids.

4. Plaque selon la revendication 3 dans laquelle la concentration en ledit produit thermoplastique dans la couche externe est égale à environ 20 à 50 % en poids.

5. Plaque alvéolaire selon l'une des revendications 1 et 2 dans laquelle la concentration en ledit produit thermoplastique dans ladite couche externe peut atteindre environ 30 % en poids.

6. Plaque selon la revendication 5 dans laquelle la concentration en ledit produit thermoplastique dans la couche externe est égale à environ 20 % en poids.

7. Plaque selon l'une des revendications 1 à 6 dans laquelle l'épaisseur de ladite couche externe est comprise entre environ 30 et environ 70 µm.

## Claims

1. A panel for spacers or packaging, comprising a core layer of polyolefin which has on at least one of its faces an outer non-slip layer containing a thermoplastic material compatible with polyolefins and said material having non-slip properties, characterized in that the thickness of said outer layer is between approximately 5 and approximately 150 µm.

2. A panel according to Claim 1, wherein the concentration of said thermoplastic material in said outer layer is at least equal to approximately 5% by weight.

3. A solid panel according to either of Claims 1 and 2, wherein the concentration of said thermoplastic material in said outer layer may be up to 100% by weight.

4. A panel according to Claim 3, wherein the concentration of said thermoplastic material in said outer layer is equal to approximately 20 to 50% by weight.

5. An alveolate panel according to either of Claims 1 and 2, wherein the concentration of said thermoplastic material in said outer layer may be up to 30% by weight.

6. A panel according to Claim 5, wherein the concentration of said thermoplastic material in said outer layer is equal to approximately 20% by weight.

7. A panel according to one of Claims 1 to 6, wherein the thickness of said outer layer is between approximately 30 and approximately 70 µm.

## Patentansprüche

1. Platte für Zwischenlagen oder Verpackungen, bestehend aus einer Kernschicht aus Polyolefin, die auf mindestens einer ihrer Seiten eine Antirutsch-Außenschicht aufweist, welche ein thermoplastisches Produkt enthält, das mit den Polyolefinen kompatibel ist und Antirutsch-Eigenschaften besitzt, dadurch gekennzeichnet, daß die Dicke dieser Außenschicht zwischen etwa 5 und etwa 150 µm liegt.

2. Platte nach Anspruch 1, bei der die Konzentration des thermoplastischen Produkts in der Außenschicht mindestens etwa 5 Gew.% beträgt.

3. Massive Platte nach einem der Ansprüche 1 und 2, bei der die Konzentration des thermoplastischen Produkts in der Außenschicht 100 Gew.% erreichen kann.

4. Platte nach Anspruch 3, bei der die Konzentration des thermoplastischen Produkts in der Außenschicht etwa 20 bis 50 Gew.% beträgt.

5. Wabenförmige Platte nach einem der Ansprüche 1 und 2, bei der die Konzentration des thermoplastischen Produkts in der Außenschicht etwa 30 Gew.% erreichen kann.

6. Platte nach Anspruch 5, bei der die Konzentration des thermoplastischen Produkts in der Außenschicht etwa 20 Gew.% beträgt.

7. Platte nach einem der Ansprüche 1 bis 6, bei der die Dicke der Außenschicht zwischen etwa 30 und etwa 70 µm liegt.
